# EUROPEAN PATENT APPLICATION

(11) **EP 3 900 520 A1**
(43) Date of publication of application: **27.10.2021**
(21) Application number: 19899352.9
(22) Date of filing: 05.11.2019
(51) Int. Cl.: A01G 13/02

(54) **FLEXIBLE-STRUCTURE SYSTEM FOR FORMING TUNNELS OF VARIABLE HEIGHT AND WIDTH TO PROTECT CROPS**

(30) Priority: 19.12.2018 MX 2018016166
(71) Applicant: Con Villa, José Arturo, Puebla, 72150 (MX)
(72) Inventor: Con Villa, José Arturo, Puebla, 72150 (MX)
(74) Representative: ZBM Patents - Zea, Barlocci & Markvardsen
(86) International application number: PCT/MX2019/000118
(87) International publication number: WO 2020/130773

(57) **Abstract**

The present invention has been developed to build structures with the shape of an arch in their upper part and variable height and width to allow the placement of textile meshes to build tunnels protect crops planted in furrow. The structure is built by a series of aligned arches, which are made with grooved profiles of a flexible, resilient and resistant to outdoor conditions material, a pair of sliding couplers to fix the end of every flexible profile to a pole; poles with a trapezoidal geometry groove and couplers with double trapezoidal geometry to be inserted sliding in the grooves of the flexible poles, having fixing and position securing elements.

## Description

### Technical field of the invention

The present invention has application in the integral protection of crops in furrows and beds giving shelter from diverse climatological conditions as hailstorms and frost among others, which consists of a set of structures with arches of variable height and length, covered by different materials according to the diverse climatological conditions and which makes it easy to build variable height tunnels.

### Background of the invention

The variability of climatological or environmental conditions can bring about disastrous consequences to open pit crops over large areas of land. This is the case of hailstorms which can ruin completely large areas of open air crops. One way to protect crops in furrows and beds consists of building confined spaces for each furrow or bed, i.e., putting up structures along every furrow or set of furrows which make it possible to place coverings such as films or meshes to make tunnels to protect crops against adverse climatological conditions.

One of the limitations of that kind of structures is that they are rigid and do not allow to be modified in their height or width. Therefore, they are useful only for those kinds of crops which do not grow taller than the height of the structure. This implies that the height of the structures and the different kinds of coverings placed on them will depend on the kinds of crops.

The structures found nowadays are rigid frames or rigid arches which makes it difficult to replace, remove or change the flexible coverings used to protect the crops. In the cases where different coverings are necessary, its use is even more complicated as it is required to dismount one type of covering to mount another covering of a different material according to climatological conditions.

The German Patent Application DE102004 004 675 A1: It shows a tunnel system built by rigid arches which can have different heights varying the inclination of the arches using a system of cables and engines which modify the length and tension in the cables supporting the arches at the ends of the tunnels.

The United States Patent US3,800,468: It shows a tunnel built with aligned rigid arches. There is a protective covering over them. At the ends of the tunnel, the protective film is fixed with a pole or anchor, which closes the tunnel.

The German Utility Model Application DE202006 006 220U1: It shows a system of rigid arches whose ends are partially buried. The height of the tunnels depends on the length of the arches which is buried. The height of the tunnels affects the stability of the structure.

The Great Britain Patent Application GB2546381 A shows a system of legs or anchors to support an arch-shaped structure where the anchors have elements to limit the depth to which they are buried, and elements to fix the cover of the tunnel.

The United States Patent Application US2014/0305036 A1 shows a tunnel system built with flat sliding support structures made of memory polymer which are flat in their original form. These can be folded in different ways to build tunnels with different geometries. The ends of the support structures are buried to be fixed to the ground. The flexibility of the sliding supports of this technology affects the rigidity of the structure.

The European Patent Application EP 2910111 A1 shows a tunnel for the protection of plants against water, hail or insects. The tunnel is built with a first covering for environmental protection and two micro-perforated covers separated from each other.

The Patent Application of France FR2957751 A1 refers to a structure to build tunnels to protect vegetables in agriculture where the tunnels are built when a cover is placed on arch-shaped structures. These structures are built with rigid sections by means of coupling elements. Therefore, their height is fixed.

None of the antecedents found in the state-of-the art shows flexible arch structures to build variable-height tunnels to protect crops in beds or furrows keeping the possibility of changing the kind of covering used according to climate conditions.

### Description of the invention

One objective of the present invention is to provide a structure easy to use to build tunnels to protect cultivated furrows.

Another objective is to provide structures which can protect crops and keep the possibility of being modified in their height according to the growth of the crops or of being adapted to other crops in particular.

An additional objective of the present invention is to provide structures which can be modified in their arch height and their arch width which in turn, can cover more than one furrow depending on the kind of crop.

Furthermore, another objective of the present invention is to provide structures of variable height and width to support different kinds of coverings to build tunnels for the protection of crops.

### Description of figures

Figure 1 shows an isometric view of the extended flexible profile.
Figure 2 is an upper view of the extended flexible profile.
Figure 3 shows the flexible arch-shaped profile.
Figure 4a shows the zig-zag wire outside the profile and Figure 4b shows the zig-zag wire inside a section of the flexible profile.
Figure 5 shows the flexible profile with the zig-zag reinforcement wire and a textile cover section.
Figure 6 shows a transversal section of the kind of pole used in the present invention.
Figure 7a shows a lateral view of a base used to fix the poles and Figure 7b shows an isometric view of the same base.
Figure 8a shows a lateral view of the slide arch clip and Figure 8b shows a plan view of the same clip.
Figures 9a, 9b and 9c show a series of accessories for the arch slide clip.
Figure 10 shows a transversal section view of the flexible profile in front of the corresponding transversal section of the pole.
Figure 11 shows the most common used way of attaching the flexible profile to the pole to assemble the present invention.
Figure 12 shows one way of using the present invention.
Figure 13 shows the position of the fixing bases in parallel.
Figure 14 shows the full representation of the arch-shaped structure for the integral protection of crops.
Figure 15 shows a tunnel built with the structures of the present invention.

### Detailed description of the invention

The state-of-the art shows different kinds of profiles for greenhouses which consist of metal profiles, preferable C profiles, i.e., profiles with a central flat surface (the so-called web) and two flanges on the sides of the web. These kinds of profiles are commonly used in combination with a zig-zag metal wire used to hold a mash or cover.

The C profile is usually straight, but it can be curved to form arches used as roofs in greenhouses, building rigid structures, preferable fixed of semi fixed structures.

The present invention shows a system to build structures with the purpose of supporting different kinds of covers to protect crops planted in furrows and plantations against adverse climatological conditions such as frost, hail and solar radiation, and allowing an easy installation of the structures apart from being versatile to be modified with respect to height and width.

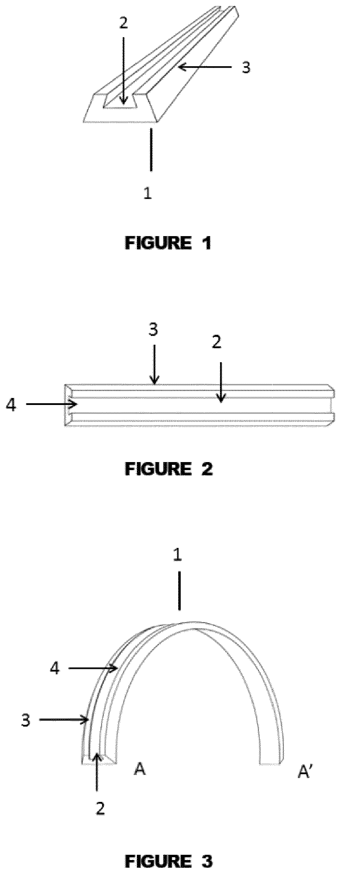

Each structure consists of three main elements: the first of them, shown in Figures 1-3, is a flexible profile which is a flexible C profile (1) having a flat surface (1), and two longitudinal flanges (3) which come close without touching, forming some kind of canal or first groove (4). Preferable, the flexible profile (1) has a trapezoidal section, that is wider at the bottom (2) and narrower at the top, where the first groove has the same configuration: wider at the bottom and narrower at the top.

Unlike other profiles, the flexible profile (1) of the present invention is made with a flexible and resilient material which allows the profile to easily form arches when forces are applied to its ends **(A-A'),** and once the forces have been withdrawn, the profile recovers its straight shape. The flexible profile (1) can be made with many materials as long as it fulfills the requirements of flexibility, resilience, resistance to UV radiation and other outdoor conditions. It can even be made with recycled materials.

Figure 3 shows the flexible profile (1) forming an arch; the trapezoidal sections make it easy to modify the shape of the profiles because when the ends (A - A') are subjected to forces the flexibility of the profiles forces the flanges (3) to close, which increases the force exerted to fix the zig-zag wire (5). The flexible profile (1) has punch hole (not shown) in each end to allow the fixation of some piece.

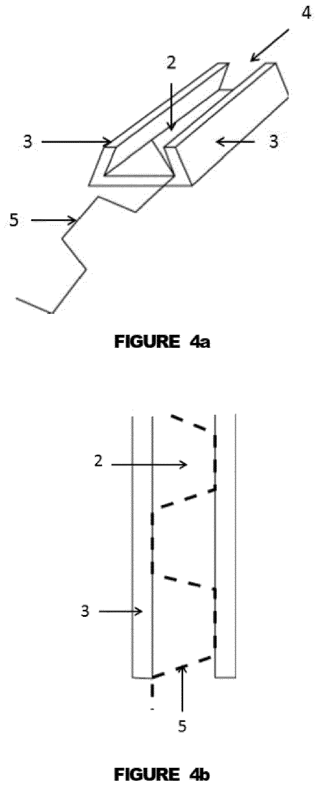

The structure of the present invention, as shown in Figures 4a and 4b, uses zig-zag wire (5) which is the same kind as the one used to fix meshes to profiles for greenhouses: it is preferable a steel wire folded in the shape of a zig-zag (5) forming trapezoids in inverted and alternating position or in the shape of a "V" also in inverted and alternating positions (not shown). The zig-zag wire (5) is semi rigid and flexible, it can or cannot be 100% resilient thus requiring additional effort to bring it back to its original shape. These qualities of the wire add structural rigidity to the system.

According to Figure 4b, we can see an upper view of a section of the flexible profile (1) where we can see that the profile is narrower on the top than on the base (2); at the same time, we can see that it has a canal or groove in the center (4) where the zig-zag wire is inserted (5).

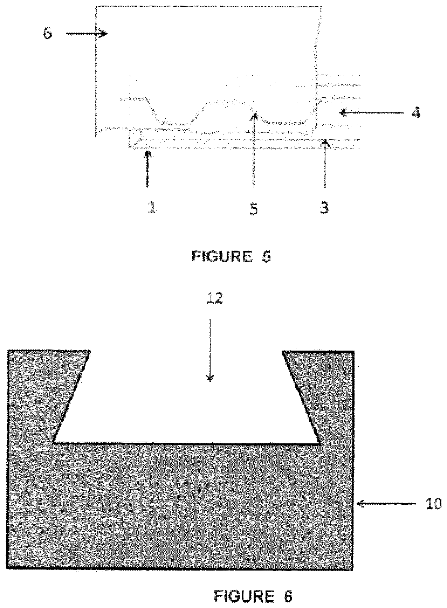

Figure 5 is an upper view of a section of the flexible profile (1) with the zig-zag wire (5) inserted on a cover (6) of textile kind to protect crops from the outdoor conditions. The flexible profile (1) of the present invention can be seen as the first component - in an integration from the bottom up - , a cover (6) is placed over the profiles to protect the crops, such cover is fixed to the profile by means of the zig-zag wire (5) placed over the cover (6) and inserted in the first groove of the flexible profile (1) in such a way that the flexible profile holds the zig-zag wire (5), this, in turn, holds the cover which preferable is an anti-hail mesh. It is worth mentioning that different covers with different purposes can be used in the present invention as they can be placed on top of each other where they are fixed by the same zig-zag wire (5) or other elements.

Figure 6 is a plan view of the transversal section of the pole (10) used to attach it to the flexible profile (1). It can be seen the pole is a rectangular profile with a square section. On the inner face, that is, the side facing the groove has a second groove (12) with trapezoidal section. Although it is like the transversal section of the flexible profile (1) only the groove has trapezoidal shape.

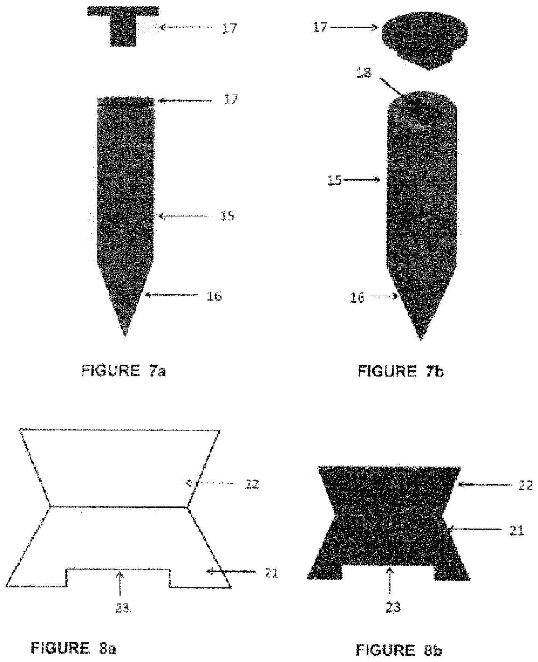

Figure 7a shows a lateral view of a base (15) used to fix poles (10). The base (15) is preferable of circular transversal section, though the transversal section can have other geometry. It has an inferior conical extreme (16), whereas the upper part is closed with a lid (17).

Figure 7b is an isometric view of the base (15) where the upper part has a square punch hole (18) or of the same transversal section as the pole (10). The lid has a rectangular projection (19) or with the same transversal section as the punch hole (18) but having slightly smaller dimension forming a male-female assembling between the punch hole (18) and the rectangular projection (19) of the lid. The assembling is used to prevent the water, dust or insects from entering the base (15) when the pole (10) is not placed in the base.

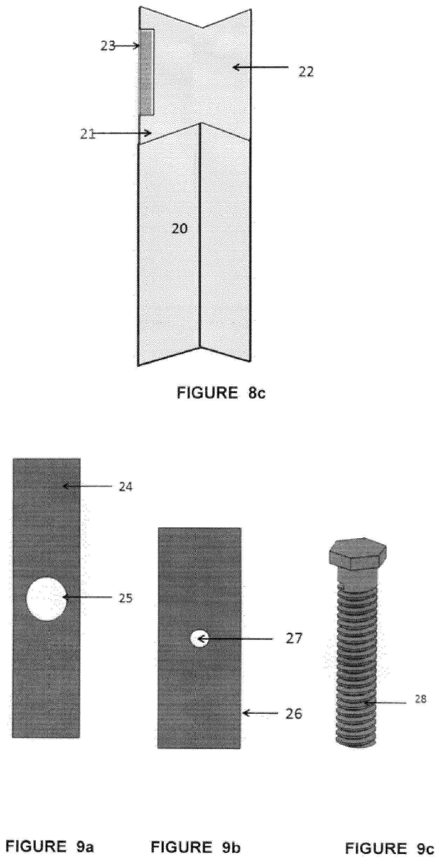

To keep the pole (10) and the flexible profile (1) it is necessary to use a coupler (20) as in is shown in Figures 8a, 8b and 8c. The coupler (20) is a solid piece (Figure 8a) with irregular transversal section which is made by trapezoidal sections in an inverted position - shown in the auxiliary lines for better comprehension -, the base of both trapezoidal sections joins together. The bigger base of the first trapezoidal section (21) is bigger than the bigger base of the second trapezoidal section (22), the second trapezoidal section has a rectangular section groove (23). Figure 8b shows the solid piece without the reference lines, whereas Figure 8c shows a perspective view of the coupler (20) where it can be seen, that its length is of only a few centimeters, this is, long enough to keep the position fixed between the flexible profile (1) and the pole (10).

Figure 9 shows the auxiliary elements which are necessary to fix the position between the pole (10), the coupler (20) and the flexible profile (1). These elements are fixing plate (24) with a central threaded hole (25), a backing plate (26), with a central passing hole (27) and a screw (28), preferable one with an Allen or hexagonal head.

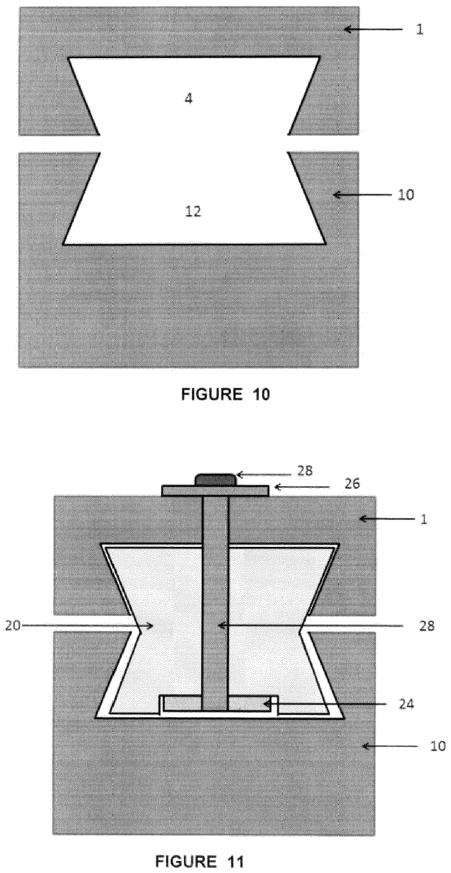

Figure 10 shows a view of the transversal section pole (10) facing the profile (1) without being both pieces coupled.

Figure 11 shows the assembling of the pieces of the present invention. It can be seen, from the bottom up, the transversal section of the pole (10) the coupler (20) which houses the fixing plate (24) in the groove of the rectangular section (23), which is fixed through the central threaded hole (25) by means of a screw (28) which goes though the coupler (20), the flexible profile and the backing plate (26) across the central hole (27).

As shown in Figure 11, the coupler (20) is hold firstly to the ends (A - A') of the flexible profile (1) following these steps:
a) The first trapezoidal section (21) of the coupler (20) is inserted in the first groove (4) of the flexible profile
b) The backing plate (26) is crossed through the central hole (27), the flexible profile is crossed by the hole placed in each of the ends (A - A') and the coupler (20) with a screw (28) fixed by means of the thread of the central hole in the fixing plate (24) with a slack remaining between the coupler (20) and the groove of the flexible profile (1)
c) The second trapezoidal section (22) is inserted in the pole (10), sliding it along the second groove (12)
d) The screw (28) is tightened in such a way that the coupler (20) gets close to the flexible profile (1), pushing the internal walls of the groove of the pole (10), increasing friction between the surfaces, and limiting the relative movement between the parts, the flexible profile (1), the clip and the pole (10) remain fixed
e) The operations (a - d) are repeated with the other end of the flexible profile (1) to fix it to a second pole (10), building an arched-shape structure in the upper part shown in Figure (12)
f) To vary the height of the arch made by the flexible profile (1), it is only necessary to loosen the screws (28) to allow the sliding of the clip (20) in the flexible profile (1) in the vertical direction along the pole (10)
g) Tutoring hooks can be fixed to the canal (12) of the poles (10), this is, the hooks (not shown) are inserted in the grooves (4) of the poles (10) to fix strings or cords which will support the plants, especially when they are in production and the fruits tend to bend and even break the branches. Some of the referred hooks are available in the market.

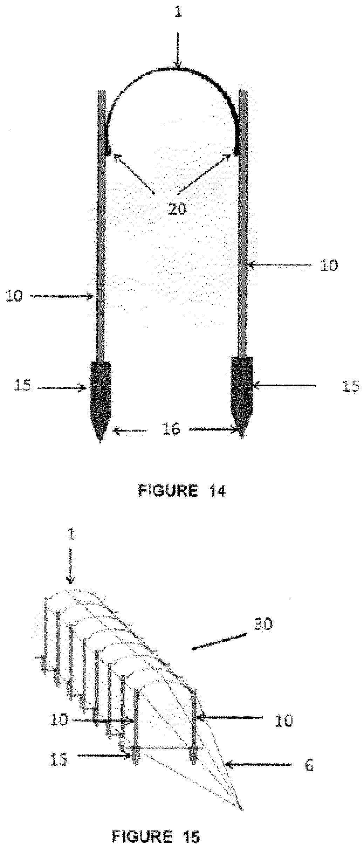

The structures built this way are placed in a row, inserting the lower end of each pole (10) in the rectangular holes (18) of the bases (15), which have been buried on the ground previously. Once the structures make a row, they are covered with an agricultural use cover (Figure 15), preferable an anti-hail mesh, a geotextile, a translucid mesh or similar, to build the tunnels (30) where the crops will grow under favorable conditions. The anti-hail mesh is preferable the best option for the described system as it serves as support to other covers.

It is necessary to follow these steps to place the cover (6), using a section of the first groove (4) of the flexible profile:
I Place the cover over the set of structures to build a tunnel (30)
II Fix the cover inserting the zig-zag wire in the groove of the flexible profile (1) in such a way that it holds the cover (6) being this cover preferable an anti-hail mesh
III Place, if necessary, other covers over the tunnel (30), holding those covers with fixing accessories installed on the poles

The fixing accessories (not shown) consist of two components: a rectangular section base with flat surface and vertical rectangular projection and an upper truncated square pyramidal frame with a central hole and downwards rectangular projection, it is inserted using pressure in the projection of the base building a frame. Its inner dimensions (length and width) are equal or slightly bigger than those of the transversal areas of the poles (10), allowing the poles to cross such frames, this prevents the tearing of the cover placed over the anti-hail meshes.

The base of the frame is placed below the cover and above the upper frame. Both parts are pressed together to assemble them, at the same time the fix a second cover, which is held by the frame to fix the second cover, the pole (10) is inserted through the frame which prevents the second cover from tearing.

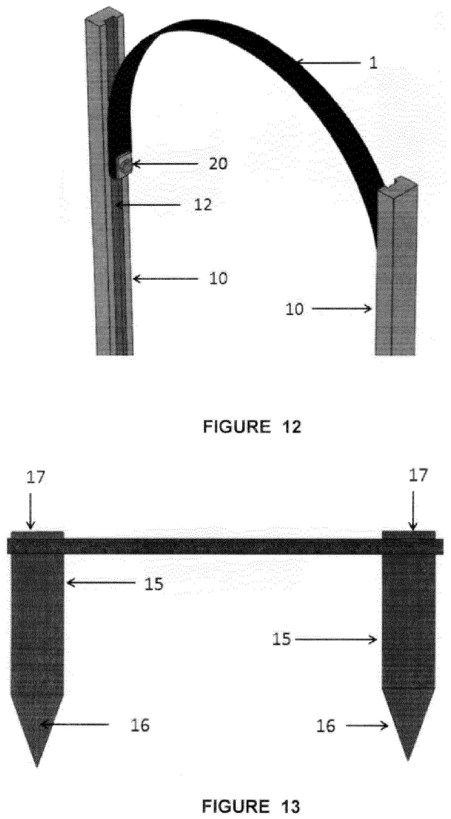

Figure 12 shows the upper part of the structure in detail where the flexible profile (1) can be seen, the couplers (20) are placed on the ends (A - A') inserted in the second groove of the pole (12) which fix the ends of the flexible profile (1), this keeps the arch shape. Its height can be modified sliding only the couplers (20) upwards or downwards, sliding them in the second groove (12) of the pole (10)

Figure 13 shows in detail the bases (15) buried in the ground.

Figure 14 shows completely the variable height and width structures of the present invention where the function of the bases (15) can be seen clearly to keep the vertical position of the poles (10) to which the couplers (20) are inserted, to fix the flexible profile (1) to keep the arch shape allowing the vertical sliding of the arch. This makes the construction of tunnels (30) to protect crops.

The configuration described above has different advantages:
- In case the cover (6) has to be retired, the flexible profiles (1) are pulled up to return to their straight shape and the cover (6) is folded along with the flexible profiles (1)
- In case a second cover has to be placed due to adverse climatic conditions, it is placed over the tunnel (30) fixing the cover to the poles using the fixing accessories previously described
- The covers (6) can be kept armed and rolled with flexible profiles (1) and zig-zag wires (5) in such a way that in case of contingency (a hailstorm, for example) can be deployed quickly and easily to protect the crops, unrolling the covers (6) with the flexible profiles (1) over the cultivated furrows inserting the couplers (20), placed at the ends of the flexible profile (1) in the second groove (12) of the poles (10). The couplers (20) and the poles (10) must be installed previously.

- Once the tunnel has been built (30) it is possible to vary its height to help the growth of the plants. For this, it is only necessary to loosen the screws (28) of the couplers (20), to slide upwards the couplers (20) along with the flexible profiles (1) and then tighten again the screws (28) to fix the position of the arches.
- The width of each tunnel (30) can be modified by only unearthing and burying the bases (15) of the poles (10) with a wider separation between every pair of poles (10) placed in front of each other in parallel rows. It is recommended that this action be done unearthing and burying each pair of poles (10) simultaneously.
- The poles have clips in their inferior section to maintain the sides of the tunnel (30) closed, keeping the textile covers at ground level.

The ends of the covers which make the roofs of every tunnel (30) are fixed to a base (24) pole or anchor which is buried to close the tunnel (30).

For the present invention it is possible to use different kinds of covers like geotextiles, shadow meshes, anti-hail meshes and non-woven covers to name a few but not in a limiting way.

Furthermore, rigid o semi rigid arch-shaped profiles can be used, as it is only necessary to loosen the couplers (20) to vary height and move both sliding couples (2) upwards in every pole, keeping together both sliding clip (20) and flexible profile (1). However, when the flexible profile (1) of the present invention is used it is possible to vary not only the height but also the width of the tunnel (30) by only separating the poles (10).

## Claims

1. A structure with an arch-shaped upper part to build tunnels with variable height for the protection of crops, wherein a pair of rectangular section poles with a trapezoidal groove on one of its surfaces, when the poles are placed in front of each other, a flexible profile with a trapezoidal transversal section, a pair of vertically sliding couplers, a zig-zag wire and bases for the poles; wherein the couplers have an elongated shape and a transversal section with the shape of two trapezoids joint at their narrower base, in such a way that the couplers are inserted sliding in the corresponding grooves of the poles and the flexible profile, which permits to vary the height of the structures; every clip being fixed to each end of the flexible profile; wherein the zig-zag wire is used to secure a protective cover over the grooves of the flexible profiles.

2. The arch-shaped structure to build tunnels with variable height to protect the crops of claim 1, wherein in the flexible profile, the opening of the groove is narrower than the base of the groove, wherein the profile is flexible and resilient.

3. The arch-shaped structure to build tunnels with variable height to protect the crops of claim 2, wherein the profile is made with material resistant to outdoor conditions.

4. The arch-shaped structure to build tunnels with variable height to protect the crops of claim 3, wherein the profile and the poles can be made of a recycled material.

5. The arch-shaped structure to build tunnels with variable height to protect the crops of claim 3, wherein the profile and the poles can be made of polymeric material, metal, composites or a combination of them.

6. The arch-shaped structure to build tunnels of variable height to protect the crops of claim 1 or 5, wherein the pole has elements near its lower end to fix the textile covers.

7. The arch-shaped structure to build tunnels of variable height to protect the crops of claim 1, wherein the couplers are fixed by means of a screw, preferably one with Allen type head.

8. The structure of claim 1, wherein each pole has elements to fix textile cover at ground level in its lower end.

9. The structure of claim 1, having preformed buried bases to place and remove the poles.

10. The structure of claim 1, wherein the bases have a conical tip and an upper housing to insert the poles.

11. The structure of claim 1, wherein the width can be modified by increasing the distance between each pair of poles which conform the structure of the tunnel.
